# EUROPEAN PATENT APPLICATION

(11) **EP 3 901 887 A1**
(43) Date of publication of application: **27.10.2021**
(21) Application number: 20171171.0
(22) Date of filing: 23.04.2020
(51) Int. Cl.: G06Q 30/06

(54) **METHOD FOR OPTIMIZING A SHOPPING CART IN AN ONLINE SHOPPING PROCESS**

(71) Applicant: Industrial Nerd Ventures UG (haftungsbeschränkt), 74385 Pleidelsheim (DE)
(72) Inventor: Höferlin, Benjamin, 74385 Pleidelsheim (DE); Le, Thu, 74385 Pleidelsheim (DE)
(74) Representative: Meyer zu Bexten, Elmar

(57) **Abstract**

**Problem**

Since established marketplaces manage access by the end customer in accordance with the principle of platform economy, they can adjust the visibility of offers and additional services at will, effectively leaving individual vendors with pricing as the only differentiating factor and thus preventing consumers from accessing the variety of available options. Besides growth rates of major marketplaces, this effect becomes evident in the fact that only few online customers actually consider comparing prices with those of other retailers as part of their purchasing process, even though price, according to surveys, remains the main factor in determining which vendor to choose.

Solution

The problem is solved by provision of a database for maintaining offering data, extraction of the offering data from websites of various vendors, integration of the offering data into the shopping process such as by automatically filling the shopping cart, generalization of the shopping cart across the websites, and optimization of the shopping cart, such as in terms of a cost-efficient combination of the vendors, for example, by means of mixed-integer programming.

## Description

### Technical Field

The invention relates to the process and products as per the preamble of the independent claims.

### Background Art

In the area of online trading, market power is currently concentrated around only a few major marketplaces and online retailers. One reason for this development lies in the maximization of ordering and service quality offered by these marketplaces, which aims at increasing convenience for the consumer.

### Summary of invention

The invention as claimed is hereinafter disclosed in such a way that the technical problem with which it deals can be appreciated and the solution can be understood.

### Technical Problem

Since established marketplaces manage access by the end customer in accordance with the principle of platform economy, they are in a position to adjust the visibility of offers and additional services at will, effectively leaving individual vendors with pricing as the only differentiating factor and thus preventing consumers from accessing the variety of available options. Besides the sheer growth rates of major marketplaces, this implication becomes evident in the fact that only few online customers actually consider comparing prices with those of other retailers as part of their purchasing process - even though, according to surveys, those same customers name price as a key factor in determining which vendor to choose.

### Solution to Problem

The problem is solved as per the characterizing part of Claim 1.

### Advantageous effect of invention

An embodiment of the invention maximizes convenience for the end customer in search of a vendor through a highly automated process, providing full transparency regarding additional benefits and services offered by different vendors.

### Brief description of drawings

Figure 1 shows the layout and workflow of the method according to the invention and its components.
Figure 2 shows the process of generating a shipping model from tracking data.
Figure 3 shows an exemplary integration into a shopping cart.

### Description of embodiments

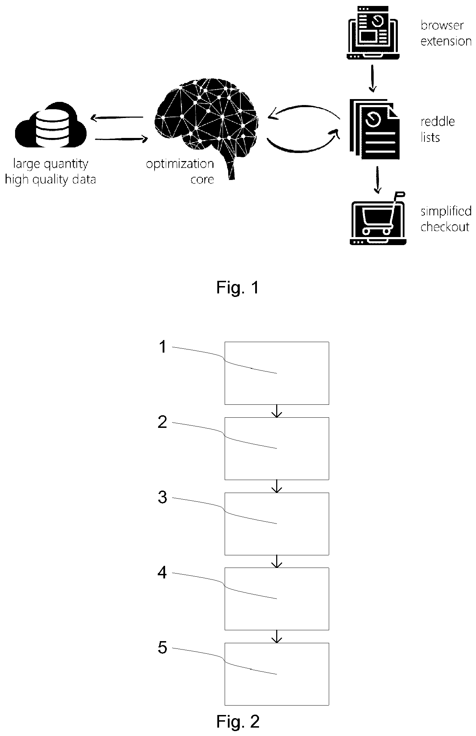

Figure 1 illustrates a system for customer-centric optimization of a shopping cart with respect to price, services, and further constraints such as environmental protection specified by the customer. Key components of that system relate to a database for maintaining offering data, data aggregation and preparation, integration into the purchasing process, a generalized shopping cart, and optimization.

As with earlier methods, the system takes into account the user's purchasing intention - that is, products contained in the generalized shopping cart or products retrieved by the system's shopping cart integration -, querying its internal database or external data sources to derive equivalent or superior offers by other vendors while observing the apparent intention of the user. In line with the user's specifications, some offers might be filtered or excluded from consideration during this optimization phase. As an example, such filter could be defined for certain vendors or their quality ratings such that no offers from those vendors would be included in the optimization result. Alternatively, those offers could be filtered out that fail to match a desired product condition, such as used, refurbished, or even "best before"-date, or whose delivery times fall short of a desired period of delivery.

Any remaining offers will be considered as candidate solutions during the actual optimization phase. Upon building an optimization model for the problem at hand, the latter is solved, for example, using methods of integer or mixed-integer optimization such as the cutting-plane method, branch and bound, branch and cut, branch and price, or delayed column generation. Further pertinent methods are laid out in NPL1.

As a rule, any solution must meet certain hard constraints based upon user specifications, a general acquisition logic, and the offering data, while the so-called objective function for the optimization is based on total purchasing costs, which are naturally to be minimized. While fulfilment of hard constraints may be ensured through general conditions or the upstream filtering step, soft constraints would be considered by said objective function during actual optimization. Typical conditions may pertain to the minimum and maximum number of items per article in the shopping cart, maximum number of the vendors to be involved in a single purchase, shipping and handling charges and constraints such as maximum weight and extra charges, lead times and in-stock availability of the items, shopping vouchers and constraints such as minimum order value or minimum number of items, and payment methods or constraints such as minimum and maximum order values and delivery destinations served by the vendors.

As the skilled person will appreciate, soft constraints are incorporated into the objective function by means of virtual costs. Examples of such conditions, which may need to be derived from the considered offerings indirectly, include supplementary services such as warranties, consulting, assembly, or training rendered by the vendors, cashback reward or incentive programs operated by the vendors or third parties, environmental and social benefits of the purchase - such as through donations and charitable contributions -, sustainability and adequacy of packaging - as determined by the vendor-, and the ecological footprint (cf. NPL2) of shipping the items by parcel service to the given shipping address. Herein, said sustainability and adequacy of the packaging may be assessed both through end customer feedback and by means of information provided by vendors regarding the shipping package and its constituents.

The ecological or "carbon footprint" of the shipping is established using a shipping model of the respective parcel service. Such model encompasses the carrier's fleet consumption data, its parcel centers and hubs, statistical data on the routes used, et cetera, and may be provided directly by the carrier.

Where not readily available, the shipping model of the parcel service, particularly the route data, is reconstructed statistically by means of network topology learning from accumulated package tracking data including, for instance, long-distance routing details such as names or other identifiers of any pass-through depots and hubs maintained by the parcel service along with their statistical frequency of use - including temporal dependencies where applicable -, last-mile routing details such as may be derived by relating the time of leaving the final depot to the time of successful delivery - or the time between consecutive unsuccessful delivery attempts, as may be the case -, rate of first-time delivery success achieved by the parcel service, or mappings of shipping addresses to the associated final depots used by the parcel service.

The process of generating such shipping model as shown in Figure 2 comprises the following steps: In step 1, package tracking data is retrieved and parsed, for instance, via the parcel service's or a third-party API. For this purpose, the tracking number and possibly further authentication data, such as a postal code, may need to be submitted.

For the generation of the shipping model, primarily successful deliveries are considered, whereas outliers would be eliminated in step 2; still, these may be used in an optional further step (not depicted) to create an error model.

Step 3 extracts the relevant data - as outlined above - to create or update a partial model, for example, of routes, vehicle circulation, and so forth.

In step 4, ambiguities in said relevant data are resolved through association with the database, such as by calculating the timespan between passing an ambiguous depot and adjacent depots in a route, computing the expected travel time between the ambiguous and adjacent depots based on the assumed location of the former, and checking that location for plausibility by comparing the actual timespan to the expected travel time.

Finally, in step 5, the extracted data is either inserted into the existing model to update the latter - replacing earlier data that has not been observed and thus validated for a certain time period - or a new model is created using more data points obtained from package tracking. Suitable data structures for partial models may include a route network whose depots are represented as nodes while the routes between them are represented as edges. Herein, edges may be assigned weights that reflect the statistically determined probability of edge usage in a route. Optionally, edge weights could include additional information on the route, such as its departure and destination depots or their daily and weekly time windows of utilization. For the sake of simplicity, last-mile routing may be reflected only in the form of an average cycle distance and, optionally, number of stops. Alternatively, a corresponding partial model may also comprise each delivery stop in terms of timing and coordinates or address, with clusters of stops optionally being aggregated into abstract waypoints depending on the requirements of the application.

Additional partial models may be dedicated to the rate of first-time delivery success - possibly represented as an average and optionally involving temporal, such as weekly, or geographical binning - and mappings of shipping addresses to the associated final depot used by the parcel service, conceivably labeled according to statistical probability based on tracking data or temporal progression.

In a variant, the acquired tracking data and shipping model generated therefrom could be used to predict the arrival of a parcel depending on carrier, sender address, and time window, which prediction may then serve as an additional constraint for the optimization problem.

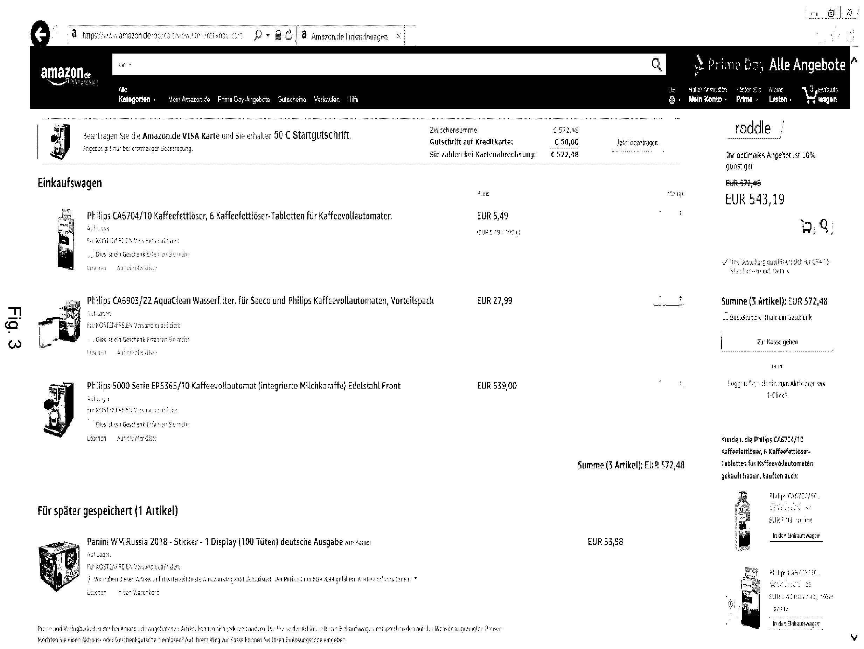

To minimize disruption to the accustomed shopping process, hence maximizing shopping convenience, the method is applied to the websites and apps of various marketplaces and online shops as well as social media platforms and search engines. For each such shop, the contents of the shopping cart, watch and wish lists (see Figure 3) may be obtained by extracting or "scraping" the data displayed in a browser or app, then exposing them to optimization or adding them to a generalized shopping basket.

Data extraction in this manner is usually based on the raw data of the page, such as its HTML DOM, the resulting display data presented to the end user - as may be acquired from a screenshot of the page in the browser or app -, or additional data provided for people with disabilities.

Based on the data thus obtained, the optimal solution is computed and provided to the user, for instance, by integration into the respective operating environment such as the HTML DOM of the browser.

To enable data extraction and solution integration for various online shops in a generalized fashion, the method explores the technology stack employed by the website or app and leverages these insights to adapt the data extraction and solution integration, for example, in light of the shop systems used, hence eliminating the need for a developer to adapt the software manually to each individual shop. Pertinent insights may be gathered, for example, via operating system functions or using the data comprised by the HTML DOM.

In another variant of the invention, models are trained and used to generalize data extraction and solution integration across different applications and websites. For this purpose, data from, for instance, different shop pages are exploited to "teach" a neural network or similar computational model the extraction of relevant features from raw data by means of coding guidelines or shop system properties regarding DOM generation, end user presentation based on UI design principles, and additional data based on accessibility design principles, which features may then be put to use, for example, in a classification model. In addition, metadata concerning the application or website and its technology stack may be consulted to classify the elements for data extraction - such as price, product title, or product image - and improve integration, as may be influenced through layout and style elements or controls.

To ensure that the solution integration is pleasing rather than disruptive to the user, another variant makes use of automated layout and style recognition of the user interface and adapts the displayed content accordingly. To this end, the system uses style descriptions provided by the user interface or website within spatial or semantic proximity, adapting the solution integration accordingly. For instance, HTML DOM elements of the same or similar type as those used for the solution integration could be considered to be elements that are located in the final layout close to, for example, the buy or price box; thus, their CSS style would be applied to the elements of the solution integration as well.

Another option would be to use a model trained with sample data - such as images or screenshots of the web page as input data or colors and layout information as labeled ground-truth data - to determine the style to be used for solution integration based on the data presented to the end user.

Preferably, completion of the ordering process is automated to maximize customer convenience. This may be achieved by automatically filling the shopping cart of the vendor selected for the optimal solution or shopping carts of several such vendors, including any information required for the order - such as shipping address, delivery and payment options - and specifying any discount codes or customer loyalty programs identified in the optimization process. At this stage as well, the techniques described above, namely a rule-based approach using technology stack information or one based on a model derived from the data, may be applied for data extraction and solution integration.

### Industrial applicability

The invention is applicable, among others, throughout the retail industry.

### Reference signs list

1 Retrieval of package tracking data
2 Filtering of outliers
3 Extraction and processing of data
4 Resolution of ambiguities
5 Model creation or update

### Citation list

The following documents are cited hereinbefore.

### Patent literature

PTL1: US 2012072303 A (BROWN JONATHAN H [US]; ZHU JOHN Z [US]) 22.03.2012

### Non-patent literature

NPL1: PADBERG, Manfred. Linear optimization and extensions. 2nd edition. Edited by GRAHAM, RL, et al. Berlin; Heidelberg: Springer-Verlag, 2013. ISBN 3540658335. p.49 et seq.
NPL2: REES, William E. Ecological footprints and appropriated carrying capacity: what urban economics leaves out. Environment and urbanization . 1992, vol.4, no.2, p.121-130.

## Claims

1. Method for optimizing a shopping cart in an online shopping process,
**characterized in**
provision of a database for maintaining offering data,
extraction of the offering data from websites of various vendors,
integration of the offering data into the shopping process such as by automatically filling the shopping cart,
generalization of the shopping cart across the websites, and
optimization of the shopping cart, such as in terms of a cost-efficient combination of the vendors, for example, by means of mixed-integer programming.

2. Method of Claim 1
**characterized in that**
the optimization is based on at least one of the following hard constraints:
minimum and maximum number of items per article in the shopping cart,
maximum number of the vendors to be involved in a purchase,
shipping and handling charges and constraints such as maximum weight and extra charges,
lead times and in-stock availability of the items,
shopping vouchers and constraints such as minimum order value or minimum number of items, and
payment methods or constraints such as minimum and maximum order values and delivery destinations served by the vendors.

3. Method of Claim 2
**characterized in that**
the optimization is further based on at least one of the following soft
constraints:
supplementary services such as warranties, consulting, assembly, or training rendered by the vendors,
cashback reward or incentive programs operated by the vendors or third parties,
environmental and social benefits of the purchase, such as through donations and charitable contributions,
sustainability and adequacy of packaging the items by the vendors, and
ecological footprint of shipping the items by parcel service to shipping addresses specified in the shopping process.

4. Method of Claim 3
**characterized in that**
the footprint is determined using a shipping model constructed by means of network topology learning from historical package tracking data.

5. Method of Claim 4
**characterized in that**
the learning encompasses
retrieval (1), such as via an application programming interface offered by the parcel service, of the tracking data,
filtering (2) of outliers, such as failed delivery attempts, from the tracking data, extraction of relevant data (3),
resolution (4) of ambiguities in the relevant data by means of the database, and
creation or update (5) of the shipping model based on the relevant data.

6. Method of Claim 5
**characterized in that**
the relevant data (3) pertains to at least one of the following:
long-distance routing details such as identifiers of pass-through depots or hubs maintained by the parcel service,
last-mile routing details such as derived by relating a time of leaving a final depot to a time of delivery by the parcel service,
rate of first-time delivery success achieved by the parcel service, and
mapping of the shipping addresses to the associated final depot used by the parcel service.

7. Method of Claim 6
**characterized in that**
the resolution (4) is effected by
calculating the timespan between passing an ambiguous depot and adjacent depots in a route,
computing the expected travel time between the ambiguous and adjacent depots based on an assumed location of the ambiguous depot, and
plausibility checking the location by comparing the timespan and travel time.

8. Method of Claim 7
**characterized in that**
the shipping model takes the form of a graph wherein adjacent nodes of the graph represent the adjacent depots, a path through the graph represents the route, and an edge connecting the adjacent nodes represents a section of the route between the adjacent depots.

9. Method of Claim 6, Claim 7, or Claim 8
**characterized in that**
the shipping model is employed to forecast the time of delivery, the optimization preferably considering the forecast.

10. Method of any of the preceding claims
**characterized in that**
the websites are probed, such as by parsing into a document object model, for underlying technology such as known e-commerce platforms and
the extraction of the offering data is adapted to the technology of each website.

11. Method of Claim 10
**characterized in that**,
upon the extraction of the offering data, a shop model is trained to classify the offering data based on raw data and user interface of the respective website and,
using the model, the extraction and integration are generalized across the websites.

12. Method of Claim 10 or Claim 11
**characterized in that**,
during the probing, layout and style of the websites are recognized and
the integration is adapted to the layout and style of each of the websites.

13. Data processing apparatus comprising means for carrying out the method of Claim 1.

14. Computer program comprising instructions which, when the program is executed by a computer, cause the computer to carry out the method of Claim 1.

15. Data carrier signal carrying the computer program of Claim 14.
